# EUROPÄISCHE PATENTSCHRIFT

(11) **EP 3 233 966 B1**
(45) Veröffentlichungstag und Bekanntmachung des Hinweises auf die Patenterteilung: **12.09.2018**
(21) Anmeldenummer: 15813764.6
(22) Anmeldetag: 15.12.2015
(51) Int. Cl.: C08G 65/14, C08G 65/26, C08G 65/332

(54) **MODIFIKATION VON ALKYL-POLYALKYLENGLYKOL MIT EPOXIDEN**
MODIFICATION OF ALKYL-POLYALKYLENGLYKOL WITH EPOXIDES
MODIFICATION D'ALKYL-POLYALKYLÈNE-GLYCOL À L'AIDE D'ÉPOXYDES

(30) Priorität: 16.12.2014 EP 14198286
(43) Veröffentlichungstag der Anmeldung: 25.10.2017
(73) Patentinhaber: BASF SE, 67056 Ludwigshafen (DE)
(72) Erfinder: ERNST, Martin, 69121 Heidelberg (DE)
(86) Internationale Anmeldenummer: PCT/EP2015/079744
(87) Internationale Veröffentlichungsnummer: WO 2016/096822

(56) Entgegenhaltungen:
- EP-A2- 0 383 544
- WO-A1-2009/088778
- CN-A- 101 712 755
- US-A- 5 162 590
- DATABASE WPI Week 199318 Thomson Scientific, London, GB; AN 1993-149025 XP002740628, & JP H05 85788 A (KAO CORP) 6. April 1993 (1993-04-06)

## Beschreibung

### HINTERGRUND DER ERFINDUNG

Die vorliegende Erfindung betrifft ein Verfahren zur Herstellung von monoethylenisch ungesättigten einseitig verschlossenen Alkylpolyalkylenglykolen, die nach diesem Verfahren erhältlichen Polyalkylenglykole und deren Verwendung.

### STAND DER TECHNIK

CN 101712755 beschreibt ein Alkoxy-Polyether-Polymer, das an einem Ende des Moleküls mindestens eine Doppelbindung aufweist. Die allgemeine Formel des Polymers ist AO-(CH₂CHR₁O)ₘ-CH₂-CH₂OH-CH₂-O-X-CHR₂=CH₂, wobei A für ein lineares oder verzweigtes Alkyl steht, R₁ für H, CH₃ oder CH₂CH₃ steht, R₂ für H oder CH₃ steht und X verschiedenartige Verbindungsgruppen wie -CH₂-, -Ph-, -CO- etc. ist. Die Herstellung dieser Verbindung erfolgt durch die Umsetzung eines Alkoholats mit Ethylenoxid. Das erhaltene Zwischenprodukt wird durch Reaktion mit einer Epoxidverbindung, die eine endständige Doppelbindung enthält, umgesetzt und somit das Polymer erhalten.

DE 4004883 (US 5,162,590) beschreibt Vinylpolyetheralkohole. Diese dienen als Zwischenprodukt zur weiteren Umsetzung mit Sulfiten zu Polyethersulfonaten. Die Vinylpolyetheralkohole werden durch Umsetzung von Polyetheralkoholen R(OA)ₙ-OH mit (ausschließlich) Vinyloxiran in Gegenwart einer Base hergestellt, wobei R für Alkyl, Alkenyl oder Arylgruppen steht. Bevorzugt werden für R längerkettige Alkylgruppen eingesetzt. Aus den Beispielen ist ersichtlich, dass es sich hier um Oxoalkoholgemische handelt. A steht für 1,2-Alkylengruppen. Der Aufbau der Alkylenoxidkette und die Einführung der reaktiven Gruppe erfolgt nicht im Sinne einer Eintopfreaktion. Die Vinyletheralkohole eignen sich als oberflächenaktive Substanzen und können unter anderem in der Wasch- und Reinigungsindustrie, Galvanotechnik, Textilindustrie, etc., eingesetzt werden.

US 4,436,672 beschreibt ein Öl-Rückgewinnungsverfahren unter Verwendung von Glycerin-Ethersulfonaten. Des Weiteren wird die Herstellung der Glycerin-Ethersulfonate beschrieben. Zunächst wird in einer Alkoxylierungsreaktion das Alkyneglykoladdukt gebildet. Dieses wird in einer Veretherung mit einer Allylglycidylverbindung umgesetzt. Im letzten Schritt wird der so erhaltene Allylglycidylether in einer Sulfonierungsreaktion zu den entsprechenden Glycerin-Ethersulfonaten umgesetzt.

CN 102464797 beschreibt ein wasserlösliches Copolymer zur Thermoverdickung auf Basis eines Enol-Ether Monomers, welches durch Umsetzung von Methyl-Polyethylenglykol mit einem Allylglycidylderivat erhalten wird.

JP 2012057030 beschreibt die Veretherung von Glycidyl(meth)acrylat mit Monoalkoxypolyalkylenglykol. Die erhaltenen Allylglycidylether können als Dispersionsagentien oder in hydraulischen Zusammensetzungen eingesetzt werden.

EP 0244841 beschreibt oberflächenaktive Verbindungen, die eine polymerisierbare Allyl- oder Methallyl-Einheit aufweisen. Die Verbindungen haben die allgemeine Formel R₁O-(AO)ₓ-CH₂CH(O(AO)_{y})H)CH₂OCH₂CR₂=CH₂, wobei R₁ für C₈-C₃₀-Alkyl, C₈-C₃₀-Alkenyl, C₈-C₃₀-Alkylaryl oder C₈-C₃₀-Aralkylaryl, R₂ steht für Wasserstoff oder Methyl, A steht für C₂-C₄-Alkylen, x für 1 bis 100 und y für 1 bis 200. Erhalten werden diese Verbindungen durch die Umsetzung von R₁O-(AO)ₓ-H mit einem Glycidylether. An das so erhaltene Zwischenprodukt werden 1 bis 200 mol C₂-C₄-Alkylenoxid addiert und so die oben beschriebenen Verbindungen hergestellt.

US 5,001,189 beschreibt Polyoxyalkylenether. Sie können zur Herstellung von dispergierbaren Polyurethanen verwendet werden. Die Polyoxyalkylenether haben ein durchschnittliches Molekulargewicht von 400 bis 10000 und besitzen mindestens sowohl eine terminale Hydroxygruppe als auch eine -SO₃X-Einheit (X = H, Alkalimetall, Ammoniumion).

EP 2463314 beschreibt ein Verfahren zur Herstellung von Kammpolymeren durch Veresterung, wobei mindestens eine Polycarbonsäure oder deren Salz mit mindestens einem Monohydroxypolyether verestert wird. Dabei wird im ersten Schritt ein Reaktionsgemisch, welches Polycarbonsäure enthält, bereit gestellt, im zweiten Schritt dieses Gemisch auf 80 °C erwärmt, und nach Zugabe einer Base werden im letzten Schritt durch Veresterung bei einer Temperatur ≥ 80 °C Kammpolymere erhalten. Des Weiteren beschreibt EP 2463314 Kammpolymere, kammpolymerartige Zusammensetzungen, hydraulisch abbindende Zusammensetzungen und Formkörper sowie die Verwendung der Kammpolymere und kammpolymerhaltigen Zusammensetzungen.

DE 3140160 beschreibt Polyethylenglykolderivate der allgemeinen Formel HO-(CHR-CH₂-O)ₓ-(CH₂CH₂O)ₙ-(CH₂CHRO)_{y}H, wobei R für Alkyl, Alkoxymethyl oder Alkenyloxymethyl steht, n ist 20 bis 50, x und y sind 0 bis 8, wobei x+y zwischen 1 bis 8 liegt. Diese Derivate werden durch Addition von Alkylenoxid, Alkyl- oder Alkenylglycidylether an Gemische von Polyethylenglykolen in Gegenwart eines basischen Katalysators erhalten.

WO 2009/000852 beschreibt einen Prozess zur Herstellung von Alkoxylatverbindungen. Dabei werden in ein Reaktorsystem Verbindungen, die aktive Wasserstoffatome besitzen, zusammen mit einem DMC-Katalysator (double metall cyanide) eingespeist. Die Verbindungen werden mit Propylenoxid und/oder Butylenoxid in Kontakt gebracht. Die resultierende Produktmischung wird nun mit Ethylenoxid in Kontakt gebracht und bildet die zweite Produktmischung. Die gebildeten Alkoxylatverbindungen haben eine Alkoholfunktion im Molekül; diese kann mit mindestens einem Äquivalent PO oder EO reagieren.

Die bekannten Verfahren zur Herstellung reaktiver (ungesättigter) Alkylpolyalkylenglykole (APG) und speziell reaktiver Polyethylenglykole (PEG) sind noch verbesserungswürdig. Reaktive Polyalkylenglykole werden gemeinhin durch Alkoxylierung von reaktiven Starteralkoholen hergestellt. Bekannte Starteralkohole sind z. B. Isoprenol, Methallyalkohol oder Hydroxybutylvinylether. Nachteilig bei diesem Verfahren kann die mangelnde Stabilität des Alkohols sein, der die erreichbare Qualität des Glykolpolyalkylenglykols (PAG) limitiert. Auch kann die Flüchtigkeit des Starteralkohols dazu führen, dass mit dem Katalysator zugegebene Lösungsmittel, insbesondere Wasser, nicht vollständig entfernt werden können. Das führt dazu, dass zwingend ein gewisser Anteil nicht mit einer reaktiven Endgruppe terminierten Glykolpolyalkylenglykols (PAG) bzw. Alkylpolyalkylenglykolglykols entsteht. Dadurch wird ebenfalls die Qualität des Glykolpolyalkylenglykols (PAG) gemindert. Nur ein mehrstufiger Prozess mit gut entwässerbaren Zwischenstufen kann Abhilfe schaffen. Jedoch können aufgrund von inhärenten Schwierigkeiten durch Zersetzung und/oder Einschleppung von Lösungsmitteln, so nur Polyalkylenglykole (PAG) in noch akzeptabler Qualität mit Molmassen im Bereich von 1100 g/mol erhalten werden. Im Fall von Isoprenol als Starter nimmt die Qualität mit höherem Ethoxylierungsgrad stetig ab. Bei einer Molmasse von ca. 2000 g/mol Glykolpolyalkylenglykol wird nur noch Glykolpolyalkylenglykol in 80 % Reinheit erhalten. Dies kann nur durch Absenken der Ethoxylierungstemperatur vermieden werden. Hier gilt jedoch eine Limitierung, z. B. durch Sicherheitsmaßnahmen.

Der vorliegenden Erfindung liegt daher die Aufgabe zugrunde, ein verbessertes Verfahren zur Herstellung reaktiver Polyalkylenglykole bereitzustellen, bei dem die genannten Nachteile vermieden werden. Insbesondere soll es nach diesem Verfahren möglich sein, hochreine und reaktive Polyalkylglykole zur Verfügung zu stellen. Dabei sollte nur eine einstufige Umsetzung mit stöchiometrischen Mengen Epoxiden erfolgen.

Überraschenderweise wurde nun gefunden, dass diese Aufgabe gelöst wird, wenn zunächst ein Polyalkylenglykol nach herkömmlichen Verfahren, durch ringöffnende Polymerisation von Alkylenoxiden, z. B. Ethylenoxid, mit einem Alkoholat bereitgestellt und abschließend mit einem Epoxid oder Epoxidäquivalent mit ethylenisch ungesättigten Gruppen die Reaktion terminiert wird. Im Anschluss können in Abhängigkeit vom eingesetzten Epoxid oder Epoxidäquivalent noch weitere Derivatisierungen erfolgen. Nach dem erfindungsgemäßen Verfahren können hochreine, monoethylenisch ungesättigte und auf einer Seite mit anderen Endgruppen terminierte reaktive Polyalkylglykole erhalten werden. Dabei ist vorteilhafterweise nur eine geringe Einsatzmenge von komplexen Epoxiden nötig.

### ZUSAMMENFASSUNG DER ERFINDUNG

Gegenstand der Erfindung ist daher ein Verfahren zur Herstellung von Polyalkylenglykolen der allgemeinen Formeln (Ia) oder (Ib) oder Gemischen davon: 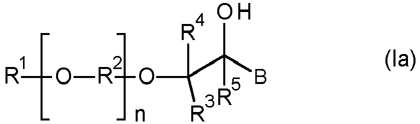 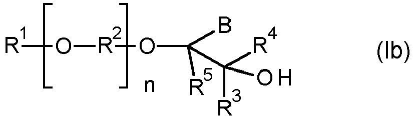 worin
R₁ für lineares oder verzweigtes C₁ - C₆ Alkyl steht,
jedes R² unabhängig voneinander für 1,2-Alkandiyl mit 2 bis 4 Kohlenstoffatomen steht;
B für Wasserstoff oder die Gruppe 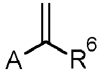 steht, wobei A an den Rest des Moleküls gebunden ist;
R⁴ für Wasserstoff, lineares oder verzweigtes C₁-C₁₀-Alkyl, C₂-C₁₀-Alkenyl steht;
R³ und R⁵ unabhängig voneinander für lineares oder verzweigtes C₁-C₁₀-Alkyl, C₂-C₁₀-Alkenyl stehen,
   wobei R³ und R⁵ auch gemeinsam mit den C-Atomen, an die sie gebunden sind, einen 4- bis 8-gliedrigen gesättigten oder ungesättigten Carbocyclus bilden können, der durch 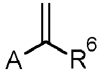 substituiert ist, wobei A an den Rest des Moleküls gebunden ist und wobei der Carbocyclus gegebenenfalls weitere Substituenten, ausgewählt unter C₁-C₁₀-Alkyl und C₂-C₁₀-Alkenylgruppen tragen kann;
mit dem Proviso, dass, wenn B Wasserstoff ist, R³ und R⁵ gemeinsam mit den C-Atomen, an die sie gebunden sind, den 4- bis 8-gliedrigen gesättigten oder ungesättigten Carbocyclus bilden;
A für eine Einfachbindung oder C₁-C₁₀-Alkylen steht;
R⁶ für Wasserstoff, lineares oder verzweigtes C₁-C₁₀-Alkyl, C₂-C₁₀-Alkenyl steht;
n für 1 bis 100 steht;
umfassend die folgenden Schritte:
   a) Bereitstellen einer Verbindung R¹-[O-R²-]ₙOH (II), und
   b) Umsetzung von R¹-[O-R²-]ₙOH (II) aus Schritt a) in Gegenwart eines Katalysators mit einem Epoxid oder einem Epoxidäquivalent der Formel (III) 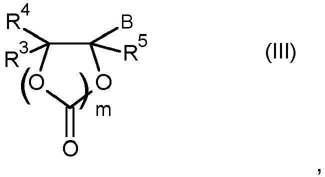
unter Erhalt von Verbindungen der Formeln (Ia) oder (Ib) oder Gemischen davon,
wobei R¹, R², R³, R⁴, R⁵ und B in den Formeln (II) und (III) die zuvor genannten Bedeutungen aufweisen und
m 0 oder 1 ist.

Ein weiterer Gegenstand der Erfindung ist ein Verfahren zur Herstellung von Polyalkylenglykolen der allgemeinen Formeln (Ia) oder (Ib) oder Gemische davon: 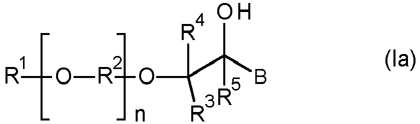 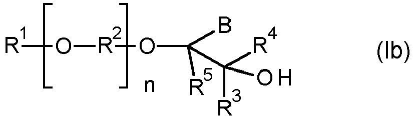 worin
R₁ für lineares oder verzweigtes C1 - C6 Alkyl steht,
jedes R² unabhängig voneinander für 1,2-Alkandiyl mit 2 bis 4 Kohlenstoffatomen steht;
B für Wasserstoff oder die Gruppe 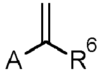 steht, wobei A an den Rest des Moleküls gebunden ist;
R³, R⁴, R⁵ unabhängig voneinander für Wasserstoff, lineares oder verzweigtes C₁-C₁₀-Alkyl, C₂-C₁₀-Alkenyl stehen;
wobei R³ und R⁵ auch gemeinsam mit den C-Atomen, an die sie gebunden sind, einen 4- bis 8-gliedrigen gesättigten oder ungesättigten Carbocyclus bilden können, der durch 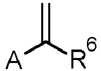 substituiert ist, wobei A an den Rest des Moleküls gebunden ist und wobei der Carbocyclus gegebenenfalls weitere Substituenten ausgewählt unter C₁-C₁₀-Alkyl und C₂-C₁₀-Alkenylgruppen tragen kann;
mit dem Proviso, dass, wenn B Wasserstoff ist, R³ und R⁵ gemeinsam mit den C-Atomen, an die sie gebunden sind, den 4- bis 8-gliedrigen gesättigten oder ungesättigten Carbocyclus bilden;
A für eine Einfachbindung oder C₁-C₁₀-Alkylen steht;
R⁶ für Wasserstoff, lineares oder verzweigtes C₁-C₁₀-Alkyl, C₂-C₁₀-Alkenyl steht;
n für 1 bis 150 steht;
umfassend die folgenden Schritte:
   a) Bereitstellen einer Verbindung R¹-[O-R²-]ₙOH (II), und
   b) Umsetzung von R¹-[O-R²-]ₙOH (II) aus Schritt a) in Gegenwart eines Katalysators mit einem Epoxid oder einem Epoxidäquivalent der Formel (III) 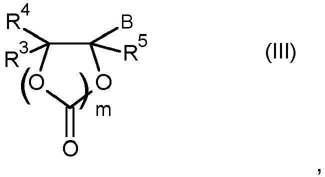
unter Erhalt von Verbindungen der Formeln (Ia) oder (Ib) oder Gemischen davon,
wobei die R¹, R², R³, R⁴, R⁵ und B der Formeln (II) und (III) die zuvor genannten Bedeutungen aufweisen und
m 0 oder 1 ist.

Ein weiterer Gegenstand der Erfindung sind Polyalkylenglykole, die durch das zuvor und im Folgenden beschriebene Verfahren erhältlich sind. Diese Polyalkylenglykole zeichnen sich dadurch aus, dass sie hochrein, hochmolekular sowie reaktiv sind und nur mit geringen Einsatzmengen von komplexen Epoxiden erhalten werden können, wie es nach dem Stand der Technik bekannten Verfahren nicht erzielt werden kann.

Ein weiterer Gegenstand der Erfindung ist die Verwendung von Polyalkylenglykolen, die durch das zuvor und im Folgenden beschriebene Verfahren erhältlich sind, insbesondere als oder in kosmetischen Mitteln, in pharmazeutischen Mitteln, in mikrobiologischen Mitteln, in Dispergiermitteln für Pigmente und Füllstoffe, als Comonomeren für die Synthese von Copolymeren oder in Betonverflüssigern.

### DETALLIERTE BESCHREIBUNG DER ERFINDUNG

Im Rahmen der vorliegenden Erfindung steht C₁-C₆-Alkyl für einen linearen oder verzweigten Alkylrest mit 1 bis 6 Kohlenstoffatomen. Beispiele hierfür sind Methyl, Ethyl, Propyl, Isopropyl, n-Butyl, sec-Butyl, Isobutyl, tert-Butyl, Pentyl, Hexyl und Stellungsisomere davon.

C₇-C₃₀-Alkyl steht für einen linearen oder verzweigten Alkylrest mit 7 bis 30 Kohlenstoffatomen. Beispiele hierfür sind Heptyl, Octyl, 2-Ethylhexyl, Nonyl, Decyl, 2-Propylheptyl, Undecyl, Dodecyl, Tridecyl, Tetradecyl, Pentadecyl, Hexadecyl, Heptadecyl, Octadecyl, Nonadecyl, Eicosyl, Henicosyl, Docosyl, Tricosyl, Tetracosyl und Stellungsisomere davon.

Im Rahmen der vorliegenden Erfindung steht C₂-C₁₀-Alkenyl für lineare oder verzweigte Alkylengruppen mit 2 bis 10 Kohlenstoffatomen. Beispiele hierfür sind Ethylen, Propylen, Butylen, Pentylen, Hexylen, Octylen, Nonylen und Decylen.

Im Rahmen der vorliegenden Erfindung steht Alkylenoxid für Ethylenoxid, Propylenoxid und Butylenoxid oder Mischungen davon.

Im Rahmen der vorliegenden Erfindung wird unter PEG Polyethylenglykole, unter PAG Polyalkylenglykole und unter APAG Alkylpolyalkylenglykole verstanden. Der Alkoxylierungsgrad dieser genannten Glykole liegt in der Regel zwischen 1 und 150.

Das erfindungsgemäße Verfahren weist folgende Vorteile auf:
- Eintopfsynthese,
- möglicher Einsatz des reaktiven Epoxides in stöchiometrischen Mengen.

Die erhaltenen Polyalkylenglykole zeichnen sich dadurch aus, dass sie:
- hochrein sind,
- hohes Molekulargewicht aufweisen,
- reaktiv sind,
- aus nachwachsenden Rohstoffen hergestellt werden können.

Hochrein bezeichnet hier insbesondere die Reinheit in Bezug auf vernetzende Komponenten mit mehreren ethylenisch ungesättigten Gruppen. Die erfindungsgemäßen Produkte bestehen optional aus einer Mischung von Alkylpolyalkylenglykol und dem gewünschten Produkt oder nur dem gewünschten Produkt, je nachdem, wie weit der Umsatz getrieben wird. Das Alkylpolyethylenglykol kann im Hinblick auf Folgereaktionen wie Polymerisationen als inert betrachtet werden. Überschüssiges Epoxid oder Epoxidäquivalente werden z. B. durch Destillation entfernt.

### Schritt a)

In Schritt a) des erfindungsgemäßen Verfahrens wird eine Verbindung

R¹-[O-R²-]ₙOH (II)

bereitgestellt, wobei
R₁ für lineares oder verzweigtes C₁-C₃₀-Alkyl steht;
jedes R² unabhängig voneinander für 1,2-Alkandiyl mit 2 bis 4 Kohlenstoffatomen steht;
n für 1 bis 150 steht.

Bevorzugte Verbindungen (II) für den Einsatz in Schritt a) sind solche, bei denen R₁ für kurzkettige Alkylgruppen steht, bevorzugt C₁-C₆-Alkylgruppen, besonders bevorzugt C₁-C₂-Alkylgruppen, insbesondere Methyl.

Weitere bevorzugte Verbindungen (II) in Schritt a) sind solche, bei denen n für 1 bis 90 steht, besonders bevorzugt für 2 bis 115 steht.

Die Verbindung (II) wird durch eine Reaktion eines Alkohols der allgemeinen Formel R¹-OH, wobei R₁ die oben genannten Bedeutungen aufweist, mit Alkylenoxid in Gegenwart eines Katalysators erhalten, wobei die Gesamtzahl der Kohlenstoffatome des Alkylenoxids 2 bis 4 beträgt.

Die Wahl der Reaktionsbedingungen bei der Umsetzung des Alkohols mit einem Alkylenoxid kann nach dem Fachmann bekannten Verfahren erfolgen.

Als Alkylenoxid wird in der Regel Ethylenoxid, Propylenoxid, Butylenoxid oder Mischungen davon eingesetzt.

Bevorzugt werden Ethylenoxid, Propylenoxid und Mischungen davon eingesetzt. Speziell wird Ethylenoxid eingesetzt.

### Schritt b)

Im Schritt b) wird die Verbindung (II) mit einem Epoxid oder Epoxidäquivalent der allgemeinen Formel (III), wobei die Reste R³, R⁴, R⁵, und B wie oben definiert sind, umgesetzt.

Besonders bevorzugte Verbindungen (II) für den Einsatz in Schritt b) sind Alkylenglykol-mono-(C₁-C₃₀-alkylether) und Polyalkylenglykol-mono-(C₁-C₃₀-alkylether), wobei die Molmasse vorzugsweise 100 bis 8100 g/mol beträgt.

Im Falle der bevorzugten Methylpolyethylenglykole beträgt die molare Masse des Methylenpolyethylenglykols 1000 bis 5500 g/mol, besonders bevorzugt 2000 bis 5000 g/mol.

Pro Mol der Verbindung (II) werden in der Regel 1 bis 2 mol, vorzugsweise 1 bis 1,5 mol Epoxid oder Epoxidäquivalent der Formel (III) eingesetzt. Die eventuell verbleibenden Reste an nicht umgesetztem Epoxid können abdestilliert oder durch Strippen mit einem Inertgas, wie Stickstoff oder Argon, entfernt werden.

Die Reaktion in Schritt b) erfolgt üblicherweise bei einer Temperatur von 50 °C bis 180 °C, vorzugsweise bei 85 °C bis 160 °C, besonders bevorzugt bei 95 °C bis 150 °C.

Die Reaktion in Schritt b) erfolgt üblicherweise bei Normaldruck oder bei erhöhtem Druck bis zu 10 bar, vorzugsweise findet die Reaktion bei Normaldruck statt.

Die Verbindung (II) aus Schritt a) kann zusammen mit dem Epoxid oder Epoxidäquivalent der Formel (III) erhitzt werden bis die gewünschte Reaktionstemperatur erreicht ist. Eine andere Möglichkeit ist, dass zunächst die Verbindung (II) aus Schritt a) auf die Reaktionstemperatur erhitzt wird. Dazu wird das Epoxid oder Epoxidäquivalent der Formel (III) bei Reaktionstemperatur zudosiert.

Bevorzugt wird die Verbindung (II) aus Schritt a) auf die Reaktionstemperatur erhitzt. Dazu wird das Epoxid oder Epoxidäquivalent der Formel (III) bei Reaktionstemperatur zudosiert. Dies kann in einem oder mehreren Schritten bei verschiedenen Temperaturen erfolgen. Die Dosierung kann auch über eine längere Zeit erfolgen und dabei die Temperatur konstant gehalten oder kontinuierlich erhöht wird. Nach vollständiger Dosierung des Epoxids oder Epoxidäquivalents der Formel (III) kann die Mischung über eine gewisse Zeit bei der Reaktionstemperatur oder einer anderen Temperatur gehalten werden.

Als Katalysator verwendet man in der Regel Alkalimetalle, Alkali- oder Erdalkalimetallhydroxide, Alkali-oder Erdalkalimetallalkoholate, Alkali- oder Erdalkalimetallacetate, Alkali- oder Erdalkalimetallhydride, Phosphane, Doppelmetallcyanide, Lewis-Säuren oder tertiäre Amine.

Bevorzugte Alkalimetalle sind Lithium, Natrium oder Kalium, besonders bevorzugt Kalium.

Bevorzugte Alkali- oder Erdalkalimetallhydroxide sind Lithium-, Natrium-, Kalium-, Calcium- oder Bariumhydroxid, besonders bevorzugt Lithium-, Natrium-, Kaliumhydroxid.

Bevorzugte Alkali- oder Erdalkalimetallalkoholate sind Natriummethylat, Kaliummethylat, Natriumethylat, Kaliumethylat oder Kalium-tert.-butylat, besonders bevorzugt sind Natriummethylat oder Kaliummethylat.

Bevorzugte Alkali- oder Erdalkalimetallacetate sind Natriumacetat (NaOAc) oder Kaliumacetat (KOAc), besonders bevorzugt Natriumacetat (NaOAc).

Bevorzugte Alkali- oder Erdalkalimetallhydride sind Lithiumhydrid, Natriumhydrid oder Kaliumhydrid, besonders bevorzugt ist Natriumhydrid.

Bevorzugtes Phosphan ist Triphenylphosphan.

Bevorzugte Lewis-Säuren sind B(CH₃)₃, B(OH)₃, BF₃, B(Cl)₃, AlCl₃, Al(OEt)₃, Ti(OiPr)₄, besonders bevorzugt ist BF₃.

Bevorzugte tertiäre Amine sind Trimethylamin, Triethylamin, Tris(ethylhexylamin), Tripropylamin, Tributylamin, Trihexylamin, Trioctylamin oder Pyridin.

Bevorzugte Doppelmetallcyanide sind Mn₃[Co(CN)₆]₂ und Zn₃[Co(CN)₆]₂.

Der Katalysator wird vorzugsweise in einer Menge von 0,01 bis 5 mol-%, bezogen auf den Alkohol R₁-[O-R₂]ₙ-OH (II) eingesetzt.

Die Reaktion in Schritt b) kann auch in Gegenwart eines unter den Reaktionsbedingungen inerten Lösungsmittels durchgeführt werden. Beispiele für diese Lösungsmittel sind z. B. Tetrahydrofuran, Methyl-tert.-butylether, Dioxan, Toluol oder Xylol. Bevorzugt wird die Reaktion ohne externe, (d. h. zugesetzte) Lösungsmittel durchgeführt.

Die erfindungsgemäße Reaktion kann kontinuierlich oder diskontinuierlich durchgeführt werden, bevorzugt wird sie diskontinuierlich durchgeführt.

Die erfindungsgemäße Reaktion kann in einem Rührkessel, einem umgepumpten Reaktor, einer Rührkesselkaskade oder einem Rohrreaktor durchgeführt werden, bevorzugt wird sie in einem Rührkessel oder umgepumpten Reaktor durchgeführt.

In einer ersten bevorzugten Ausführungsform werden Epoxide oder Epoxidäquivalente der Formel (III) für die erfindungsgemäße Reaktion verwendet, wobei
R³, R⁴, R⁵ unabhängig voneinander für Wasserstoff, lineares oder verzweigtes C₁-C₆-Alkyl, C₂-C₆-Alkenyl steht,
wobei
R³ und R⁵ gemeinsam mit der Gruppe, an die sie gebunden sind einen 5- bis 7-gliedrigen gesättigten oder ungesättigten Carbocyclus bilden, der durch 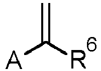 substituiert ist, wobei der Carbocyclus gegebenenfalls durch C₁-C₄-Alkyl, substituiert ist, A und R⁶ die oben genannten Bedeutungen aufweisen und m für 0 oder 1 steht.

Besonders bevorzugt werden Epoxide oder Epoxidäquivalente der Formel (III) für die erfindungsgemäße Reaktion verwendet, wobei
R⁴ für Wasserstoff, lineares oder verzweigtes C₁-C₆-Alkyl, C₂-C₆-Alkenyl steht, R³ und R⁵ gemeinsam mit der Gruppe, an die sie gebunden sind einen 5- bis 7-gliedrigen gesättigten oder ungesättigten Carbocyclus bilden, der durch 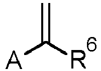 substituiert ist, wobei der Carbocyclus gegebenenfalls durch C₁-C₄-Alkyl, substituiert ist, A und R⁶ die oben genannten Bedeutungen aufweisen und m für 0 oder 1 steht.

Weiter besonders bevorzugt werden Epoxide oder Epoxidäquivalente der Formel (III) für die erfindungsgemäße Reaktion verwendet, wobei
R⁴ für Wasserstoff, lineares oder verzweigtes C₁-C₆-Alkyl, C₂-C₆-Alkenyl steht, R³ und R⁵ gemeinsam mit der Gruppe, an die sie gebunden sind, einen 6-gliedrigen gesättigten oder ungesättigten Carbocyclus bilden, der durch 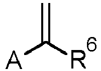 substituiert ist, wobei der Carbocyclus gegebenenfalls durch C₁-C₄-Alkyl, substituiert ist, A und R⁶ die oben genannten Bedeutungen aufweisen und m für 0 oder 1 steht. Bevorzugt steht m für 0.

Besonders bevorzugt steht R⁶ für Wasserstoff, lineares oder verzweigtes C₁-C₄-Alkyl.

Weiterhin bevorzugt steht A für eine Einfachbindung oder C₁-C₃-Alkylen.

In einer zweiten bevorzugten Ausführungsform werden auch Epoxide oder Epoxidäquivalente der Formel (III) für die erfindungsgemäße Reaktion verwendet, wobei B für die Gruppe 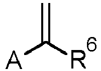 steht, wobei A an den Rest des Moleküls gebunden ist und R³, R⁴, R⁵ unabhängig voneinander für Wasserstoff, lineares oder verzweigtes C₁-C₆-Alkyl, C₂-C₆-Alkenyl stehen.

Bevorzugt werden auch Epoxide oder Epoxidäquivalente der Formel (III) für die erfindungsgemäße Reaktion verwendet, wobei B für die Gruppe 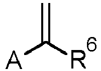 steht, wobei A an den Rest des Moleküls gebunden ist und R⁴ für Wasserstoff, lineares oder verzweigtes C₁-C₆-Alkyl, C₂-C₆-Alkenyl steht,
R³ und R⁵ unabhängig voneinander für lineares oder verzweigtes C₁-C₆-Alkyl, C₂-C₆-Alkenyl stehen und A und R⁶ die oben genannten Bedeutungen aufweisen.

Besonders bevorzugt steht R⁶ für Wasserstoff, lineares oder verzweigtes C₁-C₄-Alkyl.

Weiterhin bevorzugt steht A für eine Einfachbindung oder C₁-C₃-Alkylen.

Insbesondere sind die Epoxide oder Epoxidäquivalente der Formel (III) im Schritt b) für m = 0 ausgewählt unter Vinyloxiran, 2-Methyl-2-vinyloxiran, Limonenoxid und 1,2-Epoxy-4-vinyl-cyclohexan.

Speziell sind die Epoxide oder Epoxidäquivalente der Formel (III) in Schritt b) für m = 0 ausgewählt unter Limonenoxid und 1,2-Epoxy-4-vinyl-cyclohexan.

Epoxide oder Epoxidäquivalente der Formel (III) in Schritt b) für die m = 1 ist sind ausgewählt unter 4-Vinyl-1,3-dioxolan-2-on und 4-Methyl-4-vinyl-1,3-dioxolan-2-on.

### Schritt c)

Schritt c) erfolgt optional. Bei der Verwendung eines basischen Katalysators in Schritt b) kann es erforderlich sein, die Basizität des Endproduktes zu reduzieren. Wenn in Schritt b) ein basischer Katalysator eingesetzt wird, kann zusätzlich in einem Schritt c) der pH-Wert des in Schritt b) erhaltenen Reaktionsgemisches durch Zugabe wenigstens einer Säure eingestellt werden.

Dies kann durch eine partielle oder vollständige Neutralisation erfolgen. Es kann auch gewünscht sein, den pH-Wert des Endproduktes in den sauren Bereich zu verschieben. Bevorzugt wird daher in Schritt c) der pH-Wert auf 4 bis 8 eingestellt. Bei diesen Werten ist die Ätzwirkung gering. Die partielle oder vollständige Neutralisation oder Ansäuerung kann mit Carbonsäuren, Sulfonsäuren, CO₂, Mineralsäuren und Ionenaustauschern erfolgen. Bevorzugt sind Carbonsäuren und Mineralsäuren, besonders bevorzugt Carbonsäuren.

Eine bevorzugte Carbonsäure ist Essigsäure. Besonders bevorzugte ist Eisessig.

Ein weiterer Gegenstand der Erfindung ist, dass das Epoxid oder Epoxidäquivalent der Formel (III), welches in Schritt b) eingesetzt wird, aus mindestens einem nachwachsenden Rohstoff erhältlich ist. Darunter werden im Sinne der Erfindung natürliche (biogene) Quellen und nicht fossile Quellen, wie Erdöl, Erdgas oder Kohle, verstanden. Vorzugsweise wird das Epoxid oder Epoxidäquivalent der Formel (III) des erfindungsgemäßen Verfahrens aus Kohlenhydraten, z. B. Stärke, Cellulose und Zuckern, oder aus Lignin gewonnen. Aus erneuerbaren Quellen gewonnene Epoxide oder Epoxidäquivalente der Formel (III) weisen ein anderes ¹⁴C-zu-¹²C-Isotopenverhältnis als aus fossilen Quellen wie Erdöl gewonnene Verbindungen auf. Die in Schritt b) eingesetzten Epoxide oder Epoxidäquivalente der Formel (III) weisen dementsprechend bevorzugt ein ¹⁴C-zu-¹²C-Isotopenverhältnis im Bereich von 0,5×10⁻¹² bis 5×10⁻¹² auf.

Ein weiterer Gegenstand der Erfindung sind Alkylpolyalkylenglykole der Formel (la) oder (Ib) und Gemische davon, die durch das zuvor beschriebene Verfahren erhältlich sind.

Bevorzugt sind Alkylpolyalkylenglykole der Formeln (Ia) oder (Ib) oder Gemische, deren Rest R₁ für C₁-C₃₀-Alkyl steht. Die Alkylreste können linear oder verzweigt sein. Bevorzugte Verbindungen der Formeln (Ia) oder (Ib) oder deren Gemische sind solche, bei denen R₁ für kurzkettige Alkylgruppen steht, bevorzugt C₁-C₆-Alkylgruppen, besonders bevorzugt C₁-C₂-Alkylgruppen, insbesondere Methyl.

Bevorzugt sind Alkylpolyalkylenglykole der Formeln (Ia) oder (Ib) oder deren Gemische, deren Rest R² für Ethylen, Propylen, 1,2-Butylen oder eine 2,3-Butylengruppe oder Mischungen davon, bevorzugt Ethylen-Propylengruppen oder Mischungen davon steht.

Besonders bevorzugt sind Alkylpolyalkylenglykole der Formeln (Ia) oder (Ib) oder deren Gemische, wobei R¹, R², R⁶, A die zuvor genannten Bedeutungen aufweisen, B für Wasserstoff steht und
R⁴ für Wasserstoff, lineares oder verzweigtes C₁-C₆-Alkyl, C₂-C₆-Alkenyl steht, R³ und R⁵ gemeinsam mit der Gruppe, an die sie gebunden sind, einen 5- bis 7-gliedrigen gesättigten oder ungesättigten Carbocyclus bilden, der durch 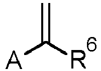 substituiert ist, wobei der Carbocyclus gegebenenfalls durch C₁-C₄-Alkyl, substituiert ist,
steht.

Weiter besonders bevorzugt sind Alkylpolyalkylenglykole der Formeln (Ia) oder (Ib) oder deren Gemische,, wobei R¹, R², R⁶, A die zuvor genannten Bedeutungen aufweisen, B für Wasserstoff steht und
R⁴ für Wasserstoff, lineares oder verzweigtes C₁-C₆-Alkyl, C₂-C₆-Alkenyl steht, R³ und R⁵ gemeinsam mit der Gruppe, an die sie gebunden sind, einen 6-gliedrigen gesättigten oder ungesättigten Carbocyclus bilden, der durch 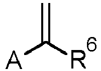 substituiert ist, wobei der Carbocyclus gegebenenfalls durch C₁-C₄-Alkyl, substituiert ist,
steht.

Besonders bevorzugt steht R⁶ für Wasserstoff, lineares oder verzweigtes C₁-C₄-Alkyl.

Weiterhin bevorzugt steht A für eine Einfachbindung oder C₁-C₃-Alkylen.

Außerdem bevorzugt sind Alkylpolyalkylenglykole der Formeln (Ia) oder (Ib) oder deren Gemische, wobei R¹, R², R⁶, A die zuvor genannten Bedeutungen aufweisen, B für 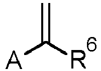 steht und R⁴ für Wasserstoff, lineares oder verzweigtes C₁-C₆-Alkyl, C₂-C₆-Alkenyl steht, R³ und R⁵ unabhängig voneinander für lineares oder verzweigtes C₁-C₆-Alkyl, C₂-C₆-Alkenyl stehen.

Besonders bevorzugt steht R⁶ für Wasserstoff, lineares oder verzweigtes C₁-C₄-Alkyl.

Weiterhin bevorzugt steht A für eine Einfachbindung oder C₁-C₃-Alkylen.

Der Alkoxylierungsgrad n der Alkylpolyalkylenglykole liegt zwischen 1 und 150, vorzugsweise 1 und 135, insbesondere 1 und 110. Der Wert n stellt üblicherweise einen Durchschnittswert dar.

Das Molgewicht der Alkylpolyalkylenglykole liegt zwischen 100 und 8100, insbesondere zwischen 2000 und 7300.

Ein weiterer Gegenstand der Erfindung ist, dass zur Herstellung der erfindungsgemäßen Alkylpolyalkylenglykole wenigstens ein Epoxid oder Epoxidäquivalent der Formel (III) eingesetzt wird, das aus mindestens einem nachwachsenden Rohstoff synthetisiert wurde.

Ein weiterer Gegenstand der Erfindung ist, dass die Alkylpolyalkylengylkole der Formeln (Ia) oder (Ib) oder deren Gemische, die durch das oben beschriebene Verfahren erhalten wurden, ein ¹⁴C-zu-¹²C-Isotopenverhältnis im Bereich von 0,5×10⁻¹² bis 5×10⁻¹² aufweisen.

Ein weiterer Gegenstand der Erfindung ist ein Polymer, enthaltend in einpolymerisierter Form:
a) wenigstens ein Polyalkylenglykol wie zuvor definiert und
b) wenigstens ein von a) verschiedenes Monomer.

Bevorzugt sind die Monomere b) ausgewählt unter
a) Ester von α,β-ethylenisch ungesättigten Monocarboxy-Dicarboxysäuren mit C₁-C₂₀ Alkoholen,
β) Verbindungen mit radikalisch polymerisierbaren α,β-ethylenisch ungesättigten Doppelbindungen und wenigstens einer kationogenen und/oder kationischen Gruppe pro Molekül,
χ) Verbindungen mit radikalisch polymerisierbaren α,β-ethylenisch ungesättigten Doppelbindungen und wenigstens einer anionogenen und/oder anionischen Gruppe pro Molekül,
δ) Ester des Vinylalkohols und Allylalkohols mit C₁-C₃₀ Monocarbonsäuren,
ε) Amidgruppen enthaltende Monomere,
φ) Ester α,β-ethylenisch ungesättigter Monocarboxy-Dicarboxysäuren mit C₂-C₃₀-Alkandiolen, Amiden von α,β-ethylenisch ungesättigten Monocarboxy-Dicarboxysäuren mit C₂-C₃₀-Aminoalkohlen, wobei primäre und sekundäre Aminogruppen enthalten sind,
γ) Phosphormonomere,
η) Vinylether, Polyether(meth)acrylate,
ι) Vinylaromaten,
κ) ethylenisch ungesättigte Nitrile,
λ) Vinylhalogenide, Vinylidenhalogenide,
µ) C₂-C₈ Monoolefine, nichtaromatische Kohlenwasserstoffe, die wenigstens zwei konjugierte Doppelbindungen aufweisen,
v) Monomere, die Harnstoffgruppen aufweisen,
o) Monomere, die Vernetzergruppen aufweisen,
und Mischungen davon.

Die Alkylpolyalkylenglykole der allgemeinen Formeln (Ia) oder (Ib) eignen sich vorzugsweise zur Formulierung von kosmetischen und pharmazeutischen Zusammensetzungen, speziell von wässrigen kosmetischen und pharmazeutischen Zusammensetzungen.

Ein weiterer Gegenstand der Erfindung sind kosmetische oder pharmazeutische Zusammensetzungen, enthaltend wenigstens ein erfindungsgemäßes Polyalkylenglykol und wenigstens einen davon verschiedenen kosmetischen oder pharmazeutischen Wirkstoff und/oder Hilfsstoff.

Ein weiterer Gegenstand der Erfindung ist die Verwendung der erfindungsgemäßen Polyalkylenglykole als oder in kosmetischen Mitteln, vorzugsweise als oder in Körperpflegemitteln, in pharmazeutischen Mitteln, in mikrobiologischen Mitteln und in Dispergiermitteln für Pigmente und Füllstoffe.

Ein weiterer Gegenstand der Erfindung ist eine kosmetische oder pharmazeutische Zusammensetzung, enthaltend
a) wenigstens ein Alkylpolyalkylenglykol der allgemeinen Formeln (Ia) oder (Ib), wie zuvor definiert,
b) gegebenenfalls wenigstens einen kosmetisch oder pharmazeutisch akzeptablen Wirkstoff, und
c) gegebenenfalls wenigstens einen von den Komponenten a) und b) verschiedenen kosmetisch oder pharmazeutisch akzeptablen Hilfsstoff,
wobei wenigstens eine der Komponenten b) und c) vorhanden sein muss.

Bevorzugt enthalten die erfindungsgemäßen kosmetischen und pharmazeutischen Zusammensetzungen die Komponente a) in einer Menge von 0,1 bis 50 Gew.-%, besonders bevorzugt von 0,5 bis 30 Gew.-%, bezogen auf das Gesamtgewicht des Mittels.

Bevorzugt enthalten die erfindungsgemäßen kosmetischen und pharmazeutischen Zusammensetzungen als Hilfsstoff c) wenigstens einen kosmetisch oder pharmazeutisch akzeptablen Träger.

Vorzugsweise ist der kosmetisch oder pharmazeutisch akzeptable Träger c) ausgewählt unter
i) Wasser,
ii) wassermischbaren organischen Lösungsmitteln, vorzugsweise C₂-C₄-Alkanolen, insbesondere Ethanol,
iii) Ölen, Fetten, Wachsen,
iv) von iii) verschiedenen Estern von C₆-C₃₀-Monocarbonsäuren mit ein-, zwei- oder dreiwertigen Alkoholen,
v) gesättigten acyclischen und cyclischen Kohlenwasserstoffen,
vi) Fettsäuren,
vii) Fettalkoholen,
viii) Treibgasen,
und Mischungen davon.

Speziell geeignete kosmetisch verträgliche Öle, Fette und Wachse c) sind in Karl-Heinz Schrader, Grundlagen und Rezepturen der Kosmetika, 2. Auflage, Verlag Hüthig, Heidelberg, S. 319 - 355 (1989) beschrieben, worauf hier Bezug genommen wird.

Bevorzugte Öle, Fette und Wachse c) sind mineralische und synthetische Öle, wie z. B. Paraffine und aliphatische Kohlenwasserstoffe mit mehr als 8 Kohlenstoffatomen, Purcellinöl, Perhydrosqualen, Siliconöle, natürliche (tierische oder pflanzliche) Öle und Fette, wie z. B. Sonnenblumenöl, Kokosöl, Palmkernöl, Palmöl, Sojaöl, Avocadoöl, Olivenöl, Süßmandelöl, Calophylumöl, Ricinusöl, Sesamöl, Jojobaöl, Karité-Öl, Hoplostethus-Öl Lanolin und Derivate davon (z. B. hydriertes Lanolin und acetyliertes Lanolin), oder Wachse, Fettsäuren, Fettsäureester, wie z. B. Triglyceride von C₆-C₃₀-Fettsäuren, Wachsester, Fettalkohole, Vaseline, sowie Mischungen davon. Geeignete Wachse sind z. B. Carnaubawachs, Candilillawachs, Bienenwachs, mikrokristallines Wachs, Ozokeritwachs und Ca-, Mg- und Al-Oleate, -Myristate, -Linoleate und -Stearate. Derartige kosmetisch verträgliche Öle, Fette und Wachse werden speziell in hautkosmetischen und dermatologischen Zusammensetzungen eingesetzt.

Bei den erfindungsgemäßen Zusammensetzungen kann es sich um hautkosmetische, haarkosmetische, dermatologische, hygienische oder pharmazeutische Zusammensetzungen handeln. Vorteilhafterweise eignen sich Polyalkylenglykole der allgemeinen Formel (Ia) oder (Ib) aufgrund der zuvor beschriebenen Eigenschaften für den Einsatz in einer Vielzahl verschiedener kosmetischer oder pharmazeutischer Zusammensetzungen. Sie können dabei als Wirkstoff, als Hilfsstoff oder als Komponente mit einer Mehrfachwirkung zum Einsatz kommen. So eignen sich die Polyalkylenglykole (Ia) oder (Ib) z. B. im Bereich der Reinigung von Haut und Haaren für Zusammensetzungen, die wenigstens eine der folgenden Eigenschaften aufweisen: eine gute Reinigungsleistung; gute rheologische Eigenschaften, d. h. die Zusammensetzungen sind zwar fließfähig, aber nicht zu leicht- oder zähflüssig, um eine optimale Applikation zu ermöglichen; die Fähigkeit, der Haut Flüssigkeit zuzuführen oder rückfettend zu wirken.

Ein weiterer Gegenstand der Erfindung ist die Verwendung von Polyalkylenglykolen, die wie zuvor definiert als oder in kosmetischen Mitteln, in pharmazeutischen Mitteln, in mikrobiologischen Mitteln, in Dispergiermitteln für Pigmente und Füllstoffe, als Comonomere für die Synthese von Copolymeren oder in Betonverflüssigern und Betonfließmitteln.

Bevorzugte Dispergiermittel sind Polycarboxylatether.

Ein weiterer Gegenstand der Erfindung ist die Verwendung der erfindungsgemäßen olefinischen Alkylpolyalkylenglykolen in Betonverflüssigern und Betonfließmitteln.

Als Betonverflüssiger und Betonfließmittel werden Betonzusatzmittel bezeichnet, die die Verarbeitbarkeit des Frischbetons verbessern, d. h. die Konsistenz von Frischbeton verändern, so dass der Beton bei ansonsten gleichbleibender Mischung fließfähiger wird.

Bevorzugte Betonverflüssiger sind Verbindungen auf Basis von Naphthalin-Formaldehyd-Kondensat-Sulfonaten, Melamin-Formaldehyd-Kondensat-Sulfonaten, Phenolsulfonsäure-Formaldehyd-Kondensaten, Polycarboxylatethern, Pfropfcopolymere von z. B. Polyethylenoxid (PEO) und Maleinsäureanhydrid, Copolymere der Acrylsäure, Maleinsäure und/oder polymerisierbare PEG-Ketten, wie Vinyl-PEG, oder PEG-Acrylsäureester, Lignosulfonat, Gluconat, Polyharnstoff, Polyvinylchlorid, Polyimid, Silikonharze und Silikonkombinationsharze.

Ein weiterer Gegenstand der Erfindung ist die Verwendung von Polyalkylenglykolen, die, wie zuvor definiert, als Comonomere für die Synthese von Copolymeren mit wenigstens einem α,β-ethylenisch ungesättigtem Monomer eingesetzt werden.

Bevorzugt ist die Verwendung von Polyalkylenglykolen, die, wie zuvor definiert, als Comonomere für die Synthese von Copolymeren eingesetzt werden, wobei die α,β-ethylenisch ungesättigten Monomere vorzugsweise ausgewählt sind unter Acrylsäure und Acrylsäureestern, Methacrylsäure und Methacrylsäureestern, Maleinsäureanhydrid, Maleinsäure, Itaconsäure , Vinyl-Polyalkylenglykolen, Isoprenyl-Polyalkylenglykolen, Allyl-Polyalkylenglykolen und Methallyl-Polyalkylenglykolen.

### BEISPIELE

Das Verfahren wird durch die nachfolgenden Beispiele näher erläutert. Bei den NMR-Auswertungen bedeutet "s" Singulett, "d" Dublett, "t" Triplett und "m" Multiplett.

### Ringöffnung von 1,2-Epoxy-4-vinyl-cyclohexan mit Alkoholen

### Beispiel 1: Reaktion von Methyldiethylenglykol (Methoxyethoxyethanol) und 1,2-Epoxy-4-vinyl-cyclohexan

### Einsatzstoffe:

20,0 g Methyldiethylenglykol (167 mmol; M = 120,1 g/mol) BASF SE 1 mL Kaliummethylat, (32 Gew.-% in Methanol, 4,2 mmol, M = 70,1 g/mol) BASF SE 21,7 g 1,2-Epoxy-4-vinyl-cyclohexan (167 mmol + 5 % Überschuss; M = 124,12 g/mol) Sigma Aldrich

20 g Methyldiethylenglykol wurden in einen ausgeheizten, mit Stickstoff befüllten 100 mL-Dreihalskolben gegeben, wobei der Dreihalskolben mit einem Magnetrührer, einem Septum und einer Destillationsbrücke ausgestattet war. Dazu wurde mittels Kanüle durch das Septum 1 mL KOMe in Methanol gegeben. Innerhalb von 60 Minuten wurde das Methanol bei 23 °C und 20 mbar mittels einer Drehschiebervakuumpumpe entfernt. Im Anschluss daran wurden, 5,5 g 1,2-Epoxy-4-vinyl-cyclohexan mittels einer Kanüle zugegeben. Die erhaltene Mischung wurde auf 100 °C erhitzt. Dabei färbte sich die Mischung orange, außerdem bildete sich ein leichtes Kondensat. Die restlichen 16,2 g 1,2-Epoxy-4-vinyl-cyclohexan wurden innerhalb von 40 Minuten zur Mischung zugetropft. Im Anschluss daran wurde die Mischung für 2,5 Stunden bei einer Temperatur von 100 °C gerührt. Der Umsatz wurde mittels Dünnschichtchromatographie (Silicagel, CHCl₃/Methanol/Wasser 88 : 11 : 1, KMnO₄: 1,2-Epoxy-4-vinyl-cyclohexan R_{f} = 0,74, Produkt R_{f} = 0,6, MDG R_{f} = 0,5) überwacht. Die Mischung wurde weitere 2 Stunden bei 120 °C gerührt und erneut mittels ¹H-NMR und GC-MS analysiert. Der Umsatz wurde durch NMR-Spektrometrie bestimmt und betrug 77 %.

### GC-MS:

GC (Agilent 7890 A) gekoppelt mit zwei MSDS (Agilent 5975C) für EI und CI.
GC Bedingungen: 30 m DB1; 0,25 mm Innendurchmesser; 0,25 µm Schichtdicke; Trägergas ist Helium; Flussrate 1,2 mL/min; Splitverhältnis 70 : 1; Temperaturrampe: 60 °C - 2 min isotherm; 6 °C/min bis 320 °C - 20 min isotherm; Einlasstemperatur 300 °C; Transferlinientemperatur 280 °C, Injektionsvolumen 0,2 Microliter. MS Bedingungen EI: Scanbereich: 25 bis 785 amu; Ionisierungsenergie: 70 eV: MS Bedingungen CI: Scanbereich: 60 bis 820 amu, chemische Ionisierung mit Ammoniak. Elutionszeit t = 23 bis 24 min, 2 Isomere, M+1 (CI) = 245 entspricht der erwarteten Molaren Masse des Additionsprodukts.
¹H-NMR, (CDCl₃, 500 MHz): Eine 2 : 1-Mischung von Produkt und Edukt wurden detektiert. Die dem Produkt zuzuordnenden Signale sind: 1,4-1,6 ppm, m, 4 H, CH₂; 1,6-1,7 ppm, m, 1 H, CH₂; 1,85 ppm, m, 1 H, CH₂; 1,95 ppm, m, 1 H, CH₂; 2,5 ppm, m, 1 H, CH-C=; 3,2 ppm, m, 1 H, CH-O-CH₂; 3,35 ppm, m, 1 H, CH-OH; 3,4 ppm, s, 3H, OCH₃; 3,5-3,6, m, 3 H, CH₂-O; 3,6 m, 1 H, CH₂-O; 3,65 ppm, m, 3 H, CH₂-O; 3,7 m, 1 H, CH₂-O; 3,8 m, 1 H, CH₂-O; 5,1 m, 2 H , C=CH₂; 6,8 m, 1 H, CH=CH₂.

### Beispiel 2:

### Einsatzstoffe:

60 g Methylenpolyethylenglykol (erhältlich als Pluriol® A 3010 E, 20 mmol; M = ca. 3000 g/mol), BASF SE
2 mL Kaliummethylat, (32 Gew.-% in Methanol, 8,4 mmol, M = 70,1 g/mol), BASF SE 3,91 g 1,2-Epoxy-4-vinyl-cyclohexan (30 mmol + 5 % Überschuss; M = 124,12 g/mol), Sigma Aldrich

60 g Pluriol® A 3010 E wurden in einen ausgeheizten, mit Stickstoff befüllten 100 mL-Dreihalskolben gegeben, wobei der Dreihalskolben mit einem Magnetrührer, Septum, einer Destillationsbrücke ausgestattet war. Dazu wurden mittels Kanüle 2 mL KOMe in Methanol gegeben. Innerhalb von 40 Minuten wurde das Methanol bei 60 °C und 20 mbar mittels einer Drehschiebervakuumpumpe entfernt. Im Anschluss daran wurde die Mischung auf 75 °C erhitzt, bis sich keine Blasen mehr bildeten. Die Mischung wurde nun auf 100 °C erhitzt und 2,61 g 1,2-epoxy-4-vinyl-cyclohexan mittels einer Kanüle innerhalb von 25 Minuten zugegeben. Es wurde für weitere 2,5 Stunden bei 100 °C gerührt. Der Umsatz wurde mittels Dünnschichtchromatographie (Silicagel, CHCl₃/Methanol/Wasser 88 : 11 : 1, KMnO₄: 1,2-Epoxy-4-vinyl-cyclohexan R_{f} = 0,75, Produkt R_{f} = 0,6, Pluriol® A 3010 E R_{f} = 0,37) überwacht. Die Mischung wurde weitere 7 Stunden bei 120 °C gerührt. Danach wurden 1,3 g 1,2-Epoxy-4-vinyl-cyclohexan zugegeben und weitere 8,5 Stunden bei einer Temperatur von 125 °C gerührt. Im Anschluss daran wurde die erhaltene Mischung erneut mittels ¹H-NMR und GC-MS analysiert. Der Umsatz wurde durch NMR-Spektrometrie nach Derivatisierung der restlichen primären OH-Gruppen mit Trichloroacetylisocyanat bestimmt und betrug 91 %.
¹H-NMR, (CDCl₃, 500 MHz): Eine 2 : 1-Mischung von Produkt und Edukt wurden detektiert. Die dem Produkt zuzuordnenden Signale sind: 1,4-1,6 ppm, m, 4 H, CH₂; 1,6-1,7 ppm, m, 1 H, CH₂; 1,85 ppm, m, 1 H, CH₂; 1,95 ppm, m, 1 H, CH₂; 2,5 ppm, m, 1 H, CH-C=; 3,2 ppm, m, 1 H, CH-O-CH₂; 3,35 ppm, m, 1 H, CH-OH; 3,4 ppm, s, 3H, OCH₃; 3,5-3,6, m, 3 H, CH₂-O; 3,6 m, 1 H, CH₂-O; 3,65 ppm, m, 3 H, CH₂-O; 3,7 m, 1 H, CH₂-O; 3,8 m, 1 H, CH₂-O; 5,1 m, 2 H , C=CH₂; 6,8 m, 1 H, CH=CH₂.

### Ringöffnung von (+)-Limonenoxid mit Alkoholen

### Beispiel 3:

### Einsatzstoffe:

15,0 g Methyldiglykol (124,9 mmol; M = 120,1 g/mol), BASF SE
1 mL Kaliummethylat, (32 Gew.-% in Methanol, 4,2 mmol, M = 70,1 g/mol), BASF SE 19,0 g (+)-Limonenoxid (124,8 mmol; M = 152,2 g/mol), Sigma Aldrich

15 g Methyldiglykol wurden in einen ausgeheizten, mit Stickstoff befüllten 100 mL-Dreihalskolben gegeben, wobei der Dreihalskolben mit einem Magnetrührer, einem Septum und einer Destillationsbrücke ausgestattet war. Dazu wurden mittels Kanüle 1 mL KO-Me in Methanol durch das Septum zugegeben. Innerhalb von 30 Minuten wurde das Methanol bei 23 °C und 20 mbar mittels einer Drehschiebervakuumpumpe entfernt. Im Anschluss daran wurden 19 g (+)-Limonenoxid mittels einer Kanüle zugegeben. Die erhaltene Mischung wurde auf 80 °C erhitzt und bei dieser Temperatur für 2 Stunden gerührt. Dabei färbte sich die Mischung gelb. Im Anschluss daran wurde die Mischung für 9,5 Stunden bei einer Temperatur von 140 °C gerührt. Der Umsatz wurde mittels Dünnschichtchromatographie (Silicagel, CHCl₃/Methanol/Wasser 88 : 11 : 1, KMnO₄: Limonenoxid R_{f} = 0,77, Produkt R_{f} = 0,64, MDG R_{f} = 0,5) überwacht. Die erhaltene Mischung war dunkelbraun und wurde mittels ¹H-NMR und GC-MS analysiert.

### GC-MS:

GC (Agilent 7890 A) gekoppelt mit zwei MSDS (Agilent 5975C) für EI und CI.
GC Bedingungen: 30 m DB1; 0,25 mm Innendurchmesser; 0,25 µm Schichtdicke; Trägergas ist Helium; Flussrate 1,2 mL/min; Splitverhältnis 70 : 1; Temperaturrampe: 60 °C - 2min isotherm; 6 °C/min bis 320 °C - 20 min isotherm; Einlasstemperatur 300 °C; Transferlinientemperatur 280 °C, Injektionsvolumen 0,2 Microliter. MS Bedingungen EI: Scanbereich: 25 bis 785 amu; Ionisierungsenergie: 70 eV: MS Bedingungen CI: Scanbereich: 60 bis 820 amu, Chemische Ionisierung mit Ammoniak. Elutionszeit t = 23 bis 24 min, 3 Isomere, M+1 (CI) = 272 entspricht der erwarteten molaren Masse des Additionsprodukts.
¹H-NMR, (CDCl₃, 500 MHz): Eine 1 : 1-Mischung von Produkt und Edukt wurden detektiert. Das gewünschte Produkt existiert in zwei Stereoisomeren. Die dem Produkt zuzuordnenden Signale sind: 1,2 ppm, s, 3 H, C=C-CH₃; 1,45-1,55 ppm, m, 2 H, CH₂; 1,7 ppm, s, 3 H, -C(OH)CH₃; 1,7-1,8 ppm, m, 1,5 H, CH₂; 1,8-1,9 ppm, m, 1,5 H CH₂; 2,0-2,2 ppm, 2H, m, CH₂; 3,2 ppm, m, 1 H, CH-O-CH₂; 3,4 ppm, s, 3H, OCH₃; 3,5-3,7 ppm, mehrere m, 8 H, CH₂-O; 4,7-4,8 ppm, m, 2 H, C=CH₂.

### Beispiel 4:

### Einsatzstoffe:

62,89 g Methylenpolyethylenglykol erhältlich als Pluriol® A 3010 E (21 mmol; M = ca. 3000 g/mol), BASF SE
0,5 mL Kaliummethylat, 32 Gew.-% in Methanol (2,1 mmol, M = 70,1 g/mol), BASF SE 9,58 g (+)-Limonenoxid (63 mmol; M = 152,2 g/mol), Sigma Aldrich

62,89 g Pluriol® A 3010 E wurden in einen ausgeheizten, mit Stickstoff befüllten 100 mL-Dreihalskolben gegeben, wobei der Dreihalskolben mit einem Magnetrührer, einem Septum und einer Destillationsbrücke ausgestattet war. Dazu wurden mittels Kanüle über das Septum 0,5 mL KOMe in Methanol gegeben. Innerhalb von 120 Minuten wurde das Methanol bei 80 °C und 60 mbar mittels einer Drehschiebervakuumpumpe entfernt. Im Anschluss daran wurden 3,19 g (+)-Limonenoxid zugegeben und die Mischung auf 140 °C erhitzt und für 4 Stunden bei dieser Temperatur gerührt. Der Umsatz wurde mittels Dünnschichtchromatographie (Silicagel, CHCl₃/Methanol/Wasser 88 : 11 : 1, KMnO₄: Limonenoxid R_{f} = 0,82, Produkt R_{f} = 0,47, Pluriol®A3010 E R_{f} = 0,40) überwacht. Die Mischung färbte sich leicht gelb. Weitere 1,6 g (+)-Limonenoxid wurden zur Mischung gegeben und weitere 4 Stunden gerührt. Dann wurde auf 160 °C erhitzt und bei dieser Temperatur für 4 Stunden gerührt. Danach wurden weitere 1,6 g (+)-Limonenoxid zugegeben und für 11 Stunden bei einer Temperatur von 160 °C gerührt. Es wurde eine dunkelbraune Mischung erhalten. Im Anschluss daran wurde die erhaltene Mischung erneut mittels ¹H-NMR und GC-MS analysiert. Umsatz wurde durch NMR-Spektrometrie nach Derivatisierung der restlichen primären OH-Gruppen mit Trichloroacetylisocyanat bestimmt. Das Verhältnis der primären zu sekundären OH-Gruppen betrug 1 : 3,4, was einem Umsatz von 71 % entspricht.
¹H-NMR, (CDCl₃, 500 MHz): Eine Mischung von Produkt und Edukt wurden detektiert. Das gewünschte Produkt existiert in zwei Stereoisomeren. Die den Produkten zuzuordnenden Signale sind: 1,2 ppm, s, 3 H, C=C-CH₃; 1,45-1,55 ppm, m, 2 H, CH₂; 1,7 ppm, s, 3 H, -C(OH)CH₃; 1,7-1,8 ppm, m, 1,5 H, CH₂; 1,8-1,9 ppm, m, 1,5 H CH₂; 2,0-2,2 ppm, 2H, m, CH₂; 3,2 ppm, m, 1 H, CH-O-CH₂; 3,4 ppm, s, 3H, OCH₃; 3,5-3,7 ppm, mehrere m, 282 H, CH₂-O; 4,7-4,8 ppm, m, 2 H, C=CH₂.

### Beispiel 5:

Das in Beispiel 4 erhaltene Produkt wurde mit 0,14 g Eisessig (2,3 mmol) versetzt. Der pH-Wert einer 10%igen Lösung in Wasser betrug ungefähr 7.

### Beispiel 6:

Das in Beispiel 2 erhaltene Produkt wurde mit 0,8 g wasserfreier Methansulfonsäure (BASF SE) versetzt. Der pH-Wert einer 10%igen Lösung in Wasser betrug ungefähr 7.

## Patentansprüche

1. Verfahren zur Herstellung von Polyalkylenglykolen der allgemeinen Formeln (Ia) oder (Ib) oder Gemischen davon: 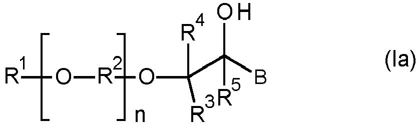 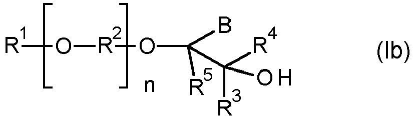 worin
R₁ für C₁-C₆ Alkyl steht,
jedes R² unabhängig voneinander für 1,2-Alkandiyl mit 2 bis 4 Kohlenstoffatomen steht;
B für Wasserstoff oder die Gruppe 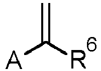 steht, wobei A an den Rest des Moleküls gebunden ist;
R⁴ für Wasserstoff, lineares oder verzweigtes C₁-C₁₀-Alkyl, C₂-C₁₀-Alkenyl steht;
R³ und R⁵ unabhängig voneinander für lineares oder verzweigtes C₁-C₁₀-Alkyl, C₂-C₁₀-Alkenyl stehen,
wobei R³ und R⁵ auch gemeinsam mit den C-Atomen, an die sie gebunden sind, einen 4- bis 8-gliedrigen gesättigten oder ungesättigten Carbocyclus bilden können, der durch 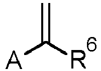 substituiert ist, wobei A an den Rest des Moleküls gebunden ist und wobei der Carbocyclus gegebenenfalls weitere Substituenten, ausgewählt unter C₁-C₁₀-Alkyl und C₂-C₁₀-Alkenylgruppen tragen kann;
mit dem Proviso, dass, wenn B Wasserstoff ist, R³ und R⁵ gemeinsam mit den C-Atomen, an die sie gebunden sind, den 4- bis 8-gliedrigen gesättigten oder ungesättigten Carbocyclus bilden;
A für eine Einfachbindung oder C₁-C₁₀-Alkylen steht;
R⁶ für Wasserstoff, lineares oder verzweigtes C₁-C₁₀-Alkyl, C₂-C₁₀-Alkenyl steht;
n für 1 bis 100 steht;
umfassend die folgenden Schritte:
a) Bereitstellen einer Verbindung R¹-[O-R²-]ₙOH (II), und
b) Umsetzung von R¹-[O-R²-]ₙOH (II) aus Schritt a) in Gegenwart eines Katalysators mit einem Epoxid oder einem Epoxidäquivalent der Formel (III) 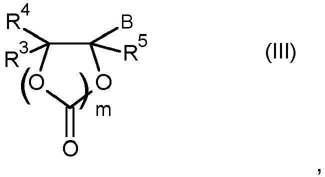
unter Erhalt von Verbindungen der Formeln (Ia) oder (Ib) oder Gemischen davon,
wobei R¹, R², R³, R⁴, R⁵ und B in den Formeln (II) und (III) die zuvor genannten Bedeutungen aufweisen und m 0 oder 1 ist.

2. Verfahren nach Anspruch 1, wobei in Schritt b) ein basischer Katalysator eingesetzt wird und man zusätzlich in einem Schritt c) den pH-Wert des in Schritt b) erhaltenen Reaktionsgemisches durch Zugabe wenigstens einer Säure einstellt.

3. Verfahren nach Anspruch 1 oder 2, wobei B für Wasserstoff steht, R⁴ für Wasserstoff, lineares oder verzweigtes C₁-C₆-Alkyl, C₂-C₆-Alkenyl steht,
R³ und R⁵ gemeinsam mit den C-Atomen, an die sie gebunden sind, einen 5- bis 7-gliedrigen gesättigten oder ungesättigten Carbocyclus bilden, der durch 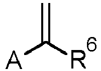 substituiert ist, wobei der Carbocyclus gegebenenfalls durch C₁-C₄-Alkyl substituiert ist, worin A und R⁶ wie in Anspruch 1 definiert sind.

4. Verfahren nach Anspruch 1 oder 2, wobei B für die Gruppe 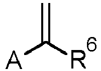 steht, wobei A an den Rest des Moleküls gebunden ist, A und R⁶ wie in Anspruch 1 definiert sind und R⁴ für Wasserstoff, lineares oder verzweigtes C₁-C₆-Alkyl oder C₂-C₆-Alkenyl steht und R³ und R⁵ unabhängig voneinander für lineares oder verzweigtes C₁-C₆-Alkyl, C₂-C₆-Alkenyl stehen.

5. Verfahren nach einem der vorherigen Ansprüche, wobei R¹ ein C₁-C₂ Alkyl, und n gleich 1 bis 100 ist.

6. Verfahren nach einem der vorherigen Ansprüche, wobei R⁶ für Wasserstoff oder lineares oder verzweigtes C₁-C₄-Alkyl steht.

7. Verfahren nach einem der vorherigen Ansprüche, wobei A für eine Einfachbindung oder C₁-C₃-Alkylen steht.

8. Verfahren nach einem der Ansprüche 1 bis 3 und 5 bis 7, wobei das Epoxid oder Epoxidäquivalent der Formel (III) in Schritt b)
für m = 0 ausgewählt ist unter, Limonenoxid und 1,2-Epoxy-4-vinyl-cyclohexan.

9. Verfahren nach einem der vorherigen Ansprüche, wobei der Katalysator in Schritt b) ausgewählt ist unter Alkalimetallen, Alkali- oder Erdalkalimetallhydroxiden, Alkali- oder Erdalkalimetallalkoholaten, Alkali- oder Erdalkalimetallacetaten, Alkali-oder Erdalkalimetallhydriden, Phosphanen, Doppelmetallcyaniden, Lewis-Säuren oder tertiären Aminen.

10. Polyalkylenglykole der allgemeinen Formeln (Ia) oder (Ib) oder Gemische davon, erhalten nach dem Verfahren, wie in einem der Ansprüche 1 bis 9 definiert.

11. Polyalkylenglykole der allgemeinen Formeln (Ia) oder (Ib) oder Gemische davon, **dadurch gekennzeichnet, dass** sie ein C¹⁴ zu C¹²-Isotopenverhältnis im Bereich von 0,5 · 10⁻¹² bis 5 · 10⁻¹² aufweisen.

12. Polyalkylenglykole nach den Ansprüchen 10 oder 11, **dadurch gekennzeichnet, dass** zu ihrer Herstellung in Schritt b) wenigstens ein Epoxid oder Epoxidäquivalent der Formel (III) eingesetzt wird, das aus mindestens einem nachwachsenden Rohstoff synthetisiert ist.

13. Polymer, enthaltend in einpolymerisierter Form:
a) wenigstens ein Polyalkylenglykol wie in den Ansprüchen 10 bis 12 definiert und
b) wenigstens ein von a) verschiedenes Monomer.

14. Verwendung von Polyalkylenglykolen nach den Ansprüchen 10 bis 12 als Comonomere für die Synthese von Copolymeren mit wenigstens einem α,β-ethylenisch ungesättigtem Monomer, vorzugsweise ausgewählt unter Acrylsäure und Acrylsäureestern, Methacrylsäure und Methacrylsäureestern, Maleinsäureanhydrid, Maleinsäure, Itaconsäure , Vinyl-Polyalkylenglykolen, Isoprenyl-Polyalkylenglykolen, Allyl-Polyalkylenglykolen und Methallyl-Polyalkylenglykolen.

15. Verwendung von Polyalkylenglykolen nach den Ansprüchen 10 bis 12 in Betonverflüssigern.

## Claims

1. A process for the preparation of polyalkylene glycols of the general formulae (Ia) or (Ib) or mixtures thereof: 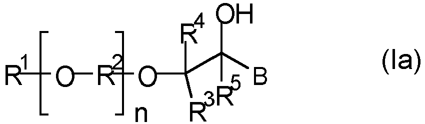 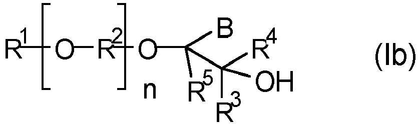 in which
R¹ is C₁-C₆-alkyl,
each R², independently of one another, is 1,2-alkanediyl having 2 to 4 carbon atoms;
B is hydrogen or the group 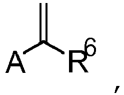 where A is bonded to the radical of the molecule;
R⁴ is hydrogen, linear or branched C₁-C₁₀-alkyl, C₂-C₁₀-alkenyl;
R³ and R⁵, independently of one another, are linear or branched C₁-C₁₀-alkyl, C₂-C₁₀-alkenyl,
where R³ and R⁵, also together with the carbon atoms to which they are bonded, can form a 4- to 8-membered saturated or unsaturated carbocycle which is substituted by 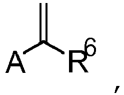 where A is bonded to the radical of the molecule and where the carbocycle can optionally carry further substituents selected from C₁-C₁₀-alkyl and C₂-C₁₀-alkenyl groups;
with the proviso that if B is hydrogen, R³ and R⁵, together with the carbon atoms to which they are bonded, form the 4- to 8-membered saturated or unsaturated carbocycle;
A is a single bond or C₁-C₁₀-alkylene;
R⁶ is hydrogen, linear or branched C₁-C₁₀-alkyl, C₂-C₁₀-alkenyl;
n is 1 to 100;
comprising the following steps:
a) provision of a compound R¹-[O-R²-]ₙ-OH (II), and
b) reaction of R¹-[O-R²-]ₙ-OH (II) from step a) in the presence of a catalyst with an epoxide or an epoxide equivalent of the formula (III) 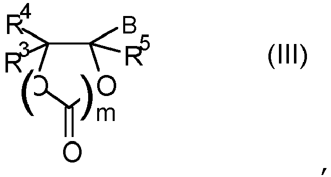 to give compounds of the formulae (Ia) or (Ib) or mixtures thereof,
where R¹, R², R³, R⁴, R⁵ and B in the formulae (II) and (III) have the meanings given above and
m is 0 or 1.

2. The process according to claim 1, wherein, in step b), a basic catalyst is used and where additionally in a step c) the pH of the reaction mixture obtained in step b) is adjusted by adding at least one acid.

3. The process according to claim 1 or 2, where B is hydrogen, R⁴ is hydrogen, linear or branched C₁-C₆-alkyl, C₂-C₆-alkenyl,
R³ and R⁵, together with the carbon atoms to which they are bonded, form a 5- to 7-membered saturated or unsaturated carbocycle which is substituted by 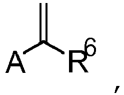 where the carbocycle is optionally substituted by C₁-C₄-alkyl, in which A and R⁶ are as defined in claim 1.

4. The process according to claim 1 or 2, where B is the group 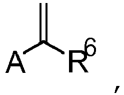 where A is bonded to the radical of the molecule, A and R⁶ are as defined in claim 1 and R⁴ is hydrogen, linear or branched C₁-C₆-alkyl or C₂-C₆-alkenyl and R³ and R⁵, independently of one another, are linear or branched C₁-C₆-alkyl, C₂-C₆-alkenyl.

5. The process according to any one of the preceding claims, where R¹ is a C₁-C₂-alkyl, and n is 1 to 100.

6. The process according to any one of the preceding claims, where R⁶ is hydrogen or linear or branched C₁-C₄-alkyl.

7. The process according to any one of the preceding claims, where A is a single bond or C₁-C₃-alkylene.

8. The process according to any one of claims 1 to 3 and 5 to 7, where the epoxide or epoxide equivalent of the formula (III) in step b)
is selected from limonene oxide and 1,2-epoxy-4-vinylcyclohexane if m = 0.

9. The process according to any one of the preceding claims, where the catalyst in step b) is selected from alkali metals, alkali metal or alkaline earth metal hydroxides, alkali metal or alkaline earth metal alcoholates, alkali metal or alkaline earth metal acetates, alkali metal or alkaline earth metal hydrides, phosphanes, double metal cyanides, Lewis acids or tertiary amines.

10. A polyalkylene glycol of the general formulae (Ia) or (Ib) or mixture thereof, obtained by the process as defined in any one of claims 1 to 9.

11. A polyalkylene glycol of the general formulae (Ia) or (Ib) or mixture thereof, wherein it has a C¹⁴ to C¹²-isotope ratio in the range from 0.5 · 10⁻¹² to 5 · 10⁻¹².

12. The polyalkylene glycol according to claims 10 or 11, wherein, for its preparation in step b), at least one epoxide or epoxide equivalent of the formula (III) is used which has been synthesized from at least one renewable raw material.

13. A polymer comprising, in polymerized-in form:
a) at least one polyalkylene glycol as defined in claims 10 to 12 and
b) at least one monomer different from a).

14. The use of polyalkylene glycols according to claims 10 to 12 as comonomers for the synthesis of copolymers with at least one α, β-ethylenically unsaturated monomer, preferably selected from acrylic acid and acrylic acid esters, methacrylic acid and methacrylic acid esters, maleic anhydride, maleic acid, itaconic acid, vinyl-polyalkylene glycols, isoprenyl-polyalkylene glycols, allyl-polyalkylene glycols and methallyl-polyalkylene glycols.

15. The use of polyalkylene glycols according to claims 10 to 12 in concrete liquefiers.

## Revendications

1. Procédé de fabrication de polyalkylène glycols de formule générale (Ia) ou (Ib) ou de mélanges de ceux-ci : 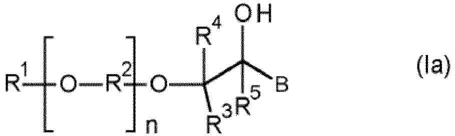 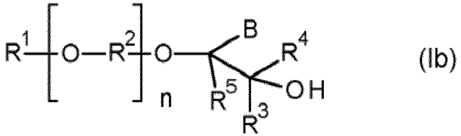 dans lesquelles
R¹ représente un alkyle en C₁-C₆,
les R² représentent chacun indépendamment les uns des autres un 1,2-alcanediyle de 2 à 4 atomes de carbone ;
B représente l'hydrogène ou le groupe 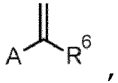 A étant relié au reste de la molécule ;
R⁴ représente l'hydrogène, un alkyle en C₁-C₁₀ linéaire ou ramifié, un alcényle en C₂-C₁₀ ;
R³ et R⁵ représentent indépendamment l'un de l'autre un alkyle en C₁-C₁₀ linéaire ou ramifié, un alcényle en C₂-C₁₀,
R³ et R⁵ pouvant également former ensemble avec les atomes C auxquels ils sont reliés un carbocycle saturé ou insaturé de 4 à 8 chaînons, qui est substitué par 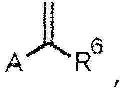 A étant relié au reste de la molécule et le carbocycle pouvant éventuellement porter d'autres substituants, choisis parmi les groupes alkyle en C₁-C₁₀ et alcényle en C₂-C₁₀ ;
à condition que lorsque B représente l'hydrogène, R³ et R⁵ forment ensemble avec les atomes C auxquels ils sont reliés le carbocycle saturé ou insaturé de 4 à 8 chaînons ;
A représente une simple liaison ou un alkylène en C₁-C₁₀ ;
R⁶ représente l'hydrogène, un alkyle en C₁-C₁₀ linéaire ou ramifié, un alcényle en C₂-C₁₀ ;
n représente 1 à 100 ;
comprenant les étapes suivantes :
a) la préparation d'un composé R¹-[O-R²-]ₙ-OH (II), et
b) la mise en réaction de R¹-[O-R²-]ₙ-OH (II) de l'étape a) en présence d'un catalyseur avec un époxyde ou un équivalent d'époxyde de formule (III) 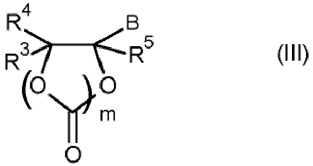 pour obtenir des composés de formule (Ia) ou (Ib) ou des mélanges de ceux-ci,
R¹, R², R³, R⁴, R⁵ et B ayant les significations indiquées précédemment dans les formules (II) et (III), et
m représentant 0 ou 1.

2. Procédé selon la revendication 1, dans lequel, à l'étape b), un catalyseur basique est utilisé et en outre, lors d'une étape c), le pH du mélange réactionnel obtenu à l'étape b) est ajusté par ajout d'au moins un acide.

3. Procédé selon la revendication 1 ou 2, dans lequel B représente l'hydrogène, R⁴ représente l'hydrogène, un alkyle en C₁-C₆ linéaire ou ramifié, un alcényle en C₂-C₆, R³ et R⁵ forment ensemble avec les atomes C auxquels ils sont reliés un carbocycle saturé ou insaturé de 5 à 7 chaînons, qui est substitué par 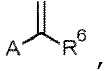 le carbocycle étant éventuellement substitué par alkyle en C₁-C₄, A et R⁶ étant tels que définis dans la revendication 1.

4. Procédé selon la revendication 1 ou 2, dans lequel B représente le groupe 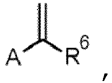 A étant relié au reste de la molécule, A et R⁶ étant tels que définis dans la revendication 1, et R⁴ représente l'hydrogène, un alkyle en C₁-C₆ linéaire ou ramifié ou un alcényle en C₂-C₆, et R³ et R⁵ représentent indépendamment l'un de l'autre un alkyle en C₁-C₆ linéaire ou ramifié, un alcényle en C₂-C₆.

5. Procédé selon l'une quelconque des revendications précédentes, dans lequel R¹ est un alkyle en C₁-C₂ et n représente 1 à 100.

6. Procédé selon l'une quelconque des revendications précédentes, dans lequel R⁶ représente l'hydrogène ou un alkyle en C₁-C₄ linéaire ou ramifié.

7. Procédé selon l'une quelconque des revendications précédentes, dans lequel A représente une simple liaison ou un alkylène en C₁-C₃.

8. Procédé selon l'une quelconque des revendications 1 à 3 et 5 à 7, dans lequel l'époxyde ou l'équivalent d'époxyde de formule (III) à l'étape b) pour m = 0 est choisi parmi l'oxyde de limonène et le 1,2-époxy-4-vinylcyclohexane.

9. Procédé selon l'une quelconque des revendications précédentes, dans lequel le catalyseur à l'étape b) est choisi parmi les métaux alcalins, les hydroxydes de métaux alcalins ou alcalino-terreux, les alcoolates de métaux alcalins ou alcalino-terreux, les acétates de métaux alcalins ou alcalino-terreux, les hydrures de métaux alcalins ou alcalino-terreux, les phosphanes, les cyanures de métaux doubles, les acides de Lewis ou les amines tertiaires.

10. Polyalkylène glycols de formule générale (la) ou (Ib) ou mélanges de ceux-ci, obtenus par le procédé tel que défini dans l'une quelconque des revendications 1 à 9.

11. Polyalkylène glycols de formule générale (la) ou (Ib) ou mélanges de ceux-ci, **caractérisés en ce qu'**ils présentent un rapport entre les isotopes C¹⁴ et C¹² dans la plage allant de 0,5·10⁻¹² à 5·10⁻¹².

12. Polyalkylène glycols selon la revendication 10 ou 11, **caractérisés en ce qu'**au moins un époxyde ou équivalent d'époxyde de formule (III) qui est synthétisé à partir d'au moins une matière première renouvelable est utilisé pour leur fabrication à l'étape b).

13. Polymère, contenant sous forme copolymérisée :
a) au moins un polyalkylène glycol tel que défini dans les revendications 10 à 12, et
b) au moins un monomère différent de a).

14. Utilisation de polyalkylène glycols selon les revendications 10 à 12 en tant que comonomères pour la synthèse de copolymères contenant au moins un monomère α,β-éthyléniquement insaturé, de préférence choisi parmi l'acide acrylique et les esters de l'acide acrylique, l'acide méthacrylique et les esters de l'acide méthacrylique, l'anhydride de l'acide maléique, l'acide maléique, l'acide itaconique, les vinyl-polyalkylène glycols, les isoprényl-polyalkylène glycols, les allyl-polyalkylène glycols et les méthallyl-polyalkylène glycols.

15. Utilisation de polyalkylène glycols selon les revendications 10 à 12 dans des fluidifiants de béton.
